# EUROPEAN PATENT SPECIFICATION

(11) **EP 2 587 385 B1**
(45) Date of publication and mention of the grant of the patent: **22.04.2015**
(21) Application number: 10849286.9
(22) Date of filing: 23.07.2010
(51) Int. Cl.: G06F 13/38

(54) **USB KEY DEVICE AND METHOD FOR REALIZING INTELLIGENT CARD COMMUNICATION USING USB INTERFACE**
USB-STICK UND VERFAHREN FÜR INTELLIGENTE KARTENKOMMUNIKATION MIT EINER USB-SCHNITTSTELLE
DISPOSITIF DE CLÉ USB ET PROCÉDÉ POUR RÉALISER UNE COMMUNICATION DE CARTE INTELLIGENTE À L'AIDE D'UNE INTERFACE USB

(30) Priority: 07.04.2010 CN 201010142982
(43) Date of publication of application: 01.05.2013
(73) Proprietor: Tendyron Corporation, Beijing 100083 (CN)
(72) Inventor: LI, Dongsheng, Beijing 100083 (CN)
(74) Representative: m patent group
(86) International application number: PCT/CN2010/075434
(87) International publication number: WO 2011/124049

(56) References cited:
- EP-A2- 1 513 098
- WO-A1-00/23936
- WO-A2-02/03312
- WO-A2-2007/023473
- CN-Y- 201 044 100
- KR-A- 20080 038 516
- US-A1- 2004 073 726

## Description

### FIELD

Embodiments of the present disclosure generally relate to an electronic technology application field, and more particularly, to a USB key device and a method for realizing an intelligent card communication of a USB key device through a USB interface.

### BACKGROUND

Nowadays, a USB key is commonly used for digital certification. Connected with a PC through a USB interface, the USB key could be used for digital certification by its internal processing chip. The USB interface of the USB key is connected with the internal processing chip after communication protocol conversion. A conventional USB key device only could communicate with the PC through the USB interface as a USB product, but couldn't be recognized as an intelligent card when connecting with an intelligent card reader through the USB interface. Therefore, the conventional USB key device couldn't communicate with the intelligent card reader to realize various intelligent card applications.

### SUMMARY

Embodiments of the present disclosure provide a USB key device and a method for realizing an intelligent card communication of a USB key device through a USB interface. The USB key device with the USB interface can not only communicate with external devices through the USB interface as a USB device, but also communicate with an intelligent card reader through the USB interface as a contact intelligent card.

The object of the present disclosure is achieved by the technical solutions below.

According to embodiments of the present disclosure, a USB key device is provided. The USB key device comprises: a security chip; a clock and a clock frequency setting unit connected with the security chip; a USB interface circuit with a first D+ pin and a first D- pin, connected with the security chip; an IO interface circuit with a bidirectional interface and a first input interface, connected with the security chip; a USB interface with a second D+ pin and a second D- pin, wherein the second D+ pin is connected with the first D+ pin of the USB interface circuit, the second D- pin is connected with the first D- pin of the USB interface circuit, the second D+ pin is connected with one of the bidirectional interface and the first input interface, and the second D-pin is connected with the other one of the bidirectional interface and the first input interface; and an interface processing unit, connected with the USB interface circuit and the IO interface circuit respectively and configured to judge a level of the bidirectional interface after setting the bidirectional interface to be in an input mode and to turn on or turn off the USB interface circuit according to the level of the bidirectional interface.

In one embodiment, the bidirectional interface of the IO interface circuit comprises a second input interface and an output interface.

In one embodiment, the interface processing unit comprises: a setting module, configured to set the bidirectional interface to be in the input mode; a judging module, configured to judge whether the bidirectional interface has a low level or a high level when the bidirectional interface is in the input mode; and a controlling module, configured to turn off the USB interface circuit when the bidirectional interface has the high level and to turn on the USB interface circuit when the bidirectional interface has the low level.

In one embodiment, the IO interface circuit is integrated in the security chip.

In one embodiment, the security chip is an intelligent card chip.

In one embodiment, the clock is integrated in the security chip.

In one embodiment, the clock frequency setting unit sets a frequency of the clock to be 9600 bps.

According to embodiments of the present disclosure, a method for realizing an intelligent card communication of a USB key device through a USB interface is also provided. The USB key device is the USB key device according to the above embodiments, and the method comprises: setting the bidirectional interface of the IO interface circuit connected with the USB interface to be in the input mode when the USB key device is powered on; judging whether a level of the bidirectional interface is a high level or a low level; if the level of the bidirectional interface is the low level, turning on the USB interface circuit to connect the security chip with the USB interface through the USB interface circuit so as to enable the USB key device to realize a USB device communication; and if the level of the bidirectional interface is the high level, turning off the USB interface circuit to connect the security chip with the USB interface through the IO interface circuit so as to enable the USB key device to realize the intelligent card communication.

In one embodiment, the method further comprises using the clock in the USB key device as an input clock when the USB key device is implementing the intelligent card communication.

In one embodiment, a frequency of the clock in the USB key device is 9600 bps which is readable for the intelligent card reader.

According to embodiments of the present disclosure, by using the IO interface circuit and connecting the USB interface with the security chip through the IO interface circuit and the USB interface circuit respectively, the USB key device can determine which external devices (such as a USB interface of the PC or the intelligent card reader) have been connected thereto, and then the USB key device can communicate with the USB device or the intelligent card reader. The USB key device according to the present disclosure is simple and easy to implement, which makes it be able to exchange data through communication with the intelligent card reader. Moreover, with the USB key device according to the present disclosure, it does not need upgrading and massive reforming of existing intelligent card reader, except for making the intelligent card interface of the intelligent card reader in parallel to form a shape of USB interface, which is easy to implement and popularize.

### BRIEF DESCRIPTION OF THE DRAWINGS

Fig. 1 is a schematic diagram of a USB key device according to a first embodiment of the present disclosure; and
Fig.2 is another schematic diagram of a USB key device according to a first embodiment of the present disclosure;
Fig. 3 is a block diagram of an interface processing unit in the USB key device according to a first embodiment of the present disclosure;
Fig. 4 is a schematic circuit diagram of the USB key device according to a first embodiment of the present disclosure;
Fig. 5 is another schematic circuit diagram of the USB key device according to a first embodiment of the present disclosure; and
Fig. 6 is a flow chart of a communication method of the USB key device according to a second embodiment of the present disclosure.

### DETAILED DESCRIPTION

The present disclosure will be described in detail below with reference to accompanied drawings and embodiments.

### Embodiment 1

The first embodiment of the present disclosure provides a USB key device, which can be used as an electronic signature token or an intelligent card.

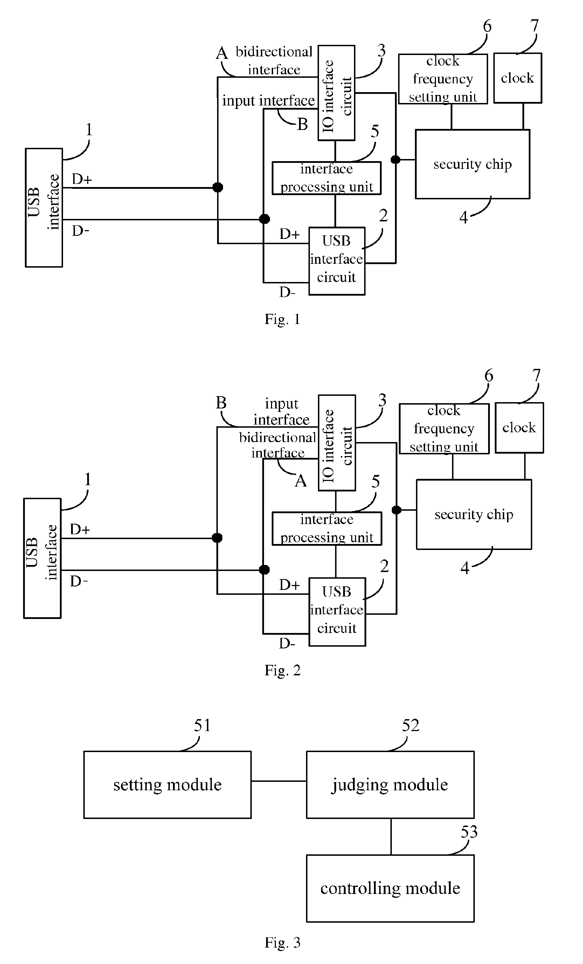

Fig. 1 is a schematic diagram of a USB key device according to a first embodiment of the present disclosure, and Fig.2 is another schematic diagram of a USB key device according to a first embodiment of the present disclosure. As shown in Fig.1 and Fig.2, the USB key device comprises a USB interface 1, a USB interface circuit 2, an IO interface circuit 3, a security chip 4, an interface processing unit 5, a clock frequency setting unit 6 and a clock 7. In practice, the security chip 4 may use an intelligent card chip, such as a SHC 1216S chip.

The USB interface 1 is electrically connected with the security chip 4 through the USB interface circuit 2 and the IO interface circuit 3 respectively.

Both the clock 7 and the clock frequency setting unit 6 are electrically connected with the security chip 4.

The USB interface circuit 2 has a D+ pin and a D- pin, and the USB interface 1 has a D+ pin and a D- pin. The D+ pin of the USB interface 1 is electrically connected with the D+ pin of the USB interface circuit 2, and the D- pin of the USB interface 1 is electrically connected with the D-pin of the USB interface circuit 2.

The IO interface circuit 3 has a bidirectional interface A and a first input interface B, in which the bidirectional interface A comprises a second input interface and an output interface.

The D+ pin of the USB interface 1 is electrically connected with either interface of the IO interface circuit 3 (i.e. either the bidirectional interface A or the first input interface B), and the D-pin of the USB interface 1 is electrically connected with the other interface of the IO interface circuit 3. In other words, the D+ pin of the USB interface 1 may be electrically connected with either the bidirectional interface A or the first input interface B of the IO interface circuit 3, the D-pin of the USB interface 1 may also be electrically connected with either the bidirectional interface A or the first input interface B of the IO interface circuit 3, as long as the D+ pin and the D- pin of the USB interface 1 are electrically connected with different interface of the IO interface circuit 3 respectively. As shown in Fig. 1, the D+ pin of the USB interface 1 is electrically connected with the bidirectional interface A of the IO interface circuit 3, and the D- pin of the USB interface 1 is electrically connected with the first input interface B of the IO interface circuit 3. As shown in Fig. 2, the D+ pin of the USB interface 1 is electrically connected with the first input interface B of the IO interface circuit 3, and the D- pin of the USB interface 1 is electrically connected with the bidirectional interface A of the IO interface circuit 3.

The interface processing unit 5 is connected with the IO interface circuit 3 and the USB interface circuit 2 respectively and configured to judge a level of the bidirectional interface A after setting the bidirectional interface A to be in an input mode and to turn on or turn off the USB interface circuit 2 according to the level of the bidirectional interface A.

Fig. 3 is a block diagram of the interface processing unit 5 in the USB key device. As shown in Fig.3, the interface processing unit 5 comprises a setting module 51, a judging module 52 and a controlling module 53.

The setting module 51 is configured to set the bidirectional interface A to be in the input mode.

The judging module 52 is configured to judge whether the bidirectional interface A has a low level or a high level when the bidirectional interface A is in the input mode.

The controlling module 53 is configured to turn off the USB interface circuit 2 when the bidirectional interface A has the high level and to turn on the USB interface circuit 2 when the bidirectional interface A has the low level.

It should be understood that, the modules in the interface processing unit 5 of the USB key device may be hardware modules or software modules, as long as they can realize the corresponding functions.

In one embodiment, the IO interface circuit 3 may be integrated in the security chip 4.

In another embodiment, all of the USB interface circuit 2, the IO interface circuit 3 and the clock frequency setting unit 6 can be integrated in a single chip, such as a ST7267 chip.

In another embodiment, all of the USB interface circuit 2, the IO interface circuit 3, the clock frequency setting unit 6 and the security chip 4 can be integrated in a single chip, such as a SHC 1408 chip.

In one embodiment, the clock 7 may be integrated in the security chip 4, and a frequency of the clock 7 may be set to be 9600 bps (consistent with a clock frequency of a common intelligent card reader) by the clock frequency setting unit 6. The frequency of the clock 7 may be set to be other frequencies, as long as the frequency of the clock 7 is consistent with the clock frequency of the external intelligent card reader.

When the above USB key device is connected with the external intelligent card reader, the D+ pin and the D- pin of the USB interface 1 in the USB key device are connected to a D+ pin and a D- pin of the USB interface in the intelligent card reader respectively. Therefore, when the D+ pin of the USB interface 1 in the USB key device is connected with the bidirectional interface A of the IO interface circuit and the D- pin of the USB interface 1 is connected with the first input interface B of the IO interface circuit 3, the D+ pin of the USB interface in the intelligent card reader must be connected with a DATA pin on an intelligent card communication interface circuit of the intelligent card reader, and the D- pin of the USB interface in the intelligent card reader must be connected with a RST pin on the intelligent card communication interface circuit of the intelligent card reader.

In contrast, when the D+ pin of the USB interface 1 in the USB key device is connected with the first input interface B of the IO interface circuit 3 and the D- pin of the USB interface 1 is connected with the bidirectional interface A of the IO interface circuit 3, the D+ pin of the USB interface in the intelligent card reader must be connected with the RST pin on the intelligent card communication interface circuit of the intelligent card reader, and the D- pin on the USB interface in the intelligent card reader must be connected with the DATA pin of the intelligent card communication interface circuit of the intelligent card reader.

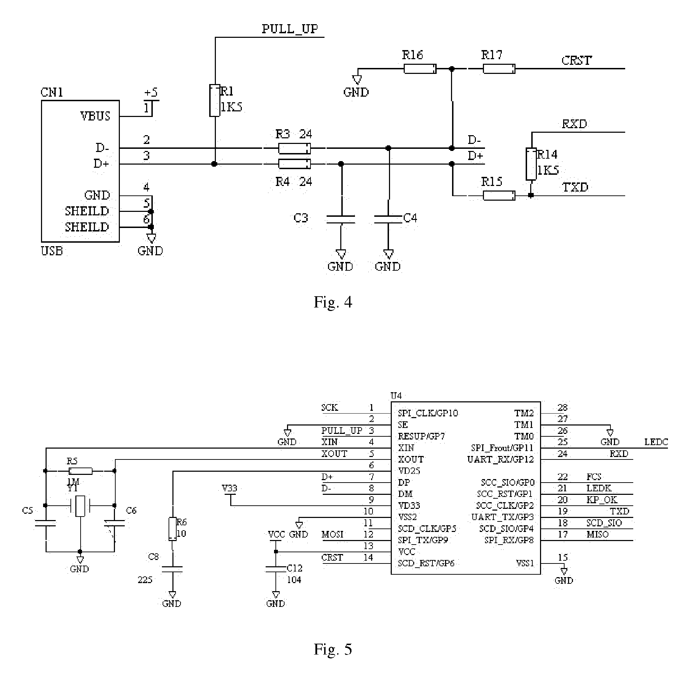

According to embodiments of the present disclosure, the USB key device is generally used as a USB slave device, the IO interface circuit 3 (comprising at least one bidirectional interface and one input interface) in the USB key device may be integrated in the security chip 4, and the D+ pin and the D- pin of the USB interface 1 is connected with the two interfaces (at least one of the two interfaces is a bidirectional interface) of the IO interface circuit 3 in parallel respectively. When the USB key is powered on, the bidirectional interface of the internal IO interface circuit 3 is set to be in the input mode (for the time being, it's in a high impedance state), and then the level of the bidirectional interface is detected. If the level of the bidirectional interface is the low level, it can be determined that the USB key device is connected with a USB master device (such as the USB interface of the PC), and then the USB key device can communicate as the USB device. If the level of the bidirectional interface is the high level, it can be determined that the USB key device is connected with the contact intelligent card reader, and then the USB interface circuit 2 is turned off to make the USB interface 1 connect with the security chip 4 through the IO interface circuit 3, in which the pin of the USB interface 1 connected with the bidirectional interface of the IO interface circuit 3 acts as the DATA pin of the interface of the contact intelligent card, the pin of the USB interface 1 connected with the input interface of the IO interface circuit 3 acts as the RST pin of the interface of the contact intelligent card, and the frequency of the clock 7 is set to be readable for the intelligent card reader. Thus, the USB key device can communicate with the contact intelligent card reader according to the standard of the ISO7816. The actual circuit connection of the USB key device according to the present disclosure is made reference to the schematic circuit diagrams shown in Fig.4 and Fig. 5.

According to embodiments of the present disclosure, by using the IO interface circuit and connecting the USB interface with the security chip through the IO interface circuit and the USB interface circuit respectively, the USB key device can determine which external devices (such as a USB interface of the PC or the intelligent card reader) have been connected thereto, and then the USB key device can communicate with the USB device or the intelligent card reader. The USB key device according to the present disclosure is simple and easy to implement, which makes it be able to exchange data through communication with the intelligent card reader. Moreover, with the USB key device according to the present disclosure, it does not need upgrading and massive reforming of existing intelligent card reader, except for making the intelligent card interface of the intelligent card reader in parallel to form a shape of USB interface, which is easy to implement and popularize.

### Embodiment 2

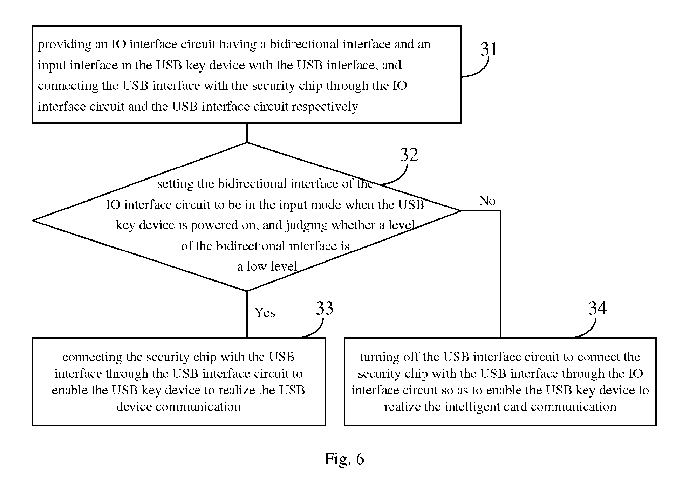

The second embodiment of the present disclosure provides a method for realizing an intelligent card communication of a USB key device through a USB interface. The USB key device is the one described in the first embodiment. As shown in Fig. 6, the method comprises the following steps.

Step 31, an IO interface circuit having an bidirectional interface and an input interface is provided in the USB key device with the USB interface, and the USB interface is connected with the security chip through the IO interface circuit and the USB interface circuit respectively.

Step 32, the bidirectional interface of the IO interface circuit is set to be in the input mode when the USB key device is powered on, and it is determined whether a level of the bidirectional interface is a low level.

Step 33, if the level of the bidirectional interface is the low level, the security chip is electrically connected with the USB interface through the USB interface circuit to enable the USB key device to realize the USB device communication.

Step 34, if the level of the directional interface is not the low level but a high level, the USB interface circuit is turned off to connect the security chip with the USB interface through the IO interface circuit so as to enable the USB key device to realize the intelligent card communication.

In practice, a clock frequency is also set to make the clock frequency of the USB key device match with the clock frequency of the external connected intelligent card reader. In general, the clock frequency of the intelligent card reader is 9600 bps.

According to embodiments of the present disclosure, by using the IO interface circuit and connecting the USB interface with the security chip through the IO interface circuit and the USB interface circuit respectively, the USB key device can determine which external devices (such as a USB interface of the PC or the intelligent card reader) have been connected thereto, and then the USB key device can communicate with the USB device or the intelligent card reader. The USB key device according to the present disclosure is simple and easy to implement, which makes it be able to exchange data through communication with the intelligent card reader. Moreover, with the USB key device according to the present disclosure, it does not need upgrading and massive reforming of existing intelligent card reader, except for making the intelligent card interface of the intelligent card reader in parallel to form a shape of USB interface, which is easy to implement and popularize.

## Claims

1. A USB key device, comprising:
a security chip;
a clock and a clock frequency setting unit connected with the security chip;
a USB interface circuit with a first D+ pin and a first D- pin, connected with the security chip ;
an IO interface circuit with a bidirectional interface and a first input interface, connected with the security chip ;
a USB interface with a second D+ pin and a second D- pin, in which the second D+ pin is connected with the first D+ pin of the USB interface circuit, the second D- pin is connected with the first D- pin of the USB interface circuit, the second D+ pin is connected with one of the bidirectional interface and the first input interface, and the second D- pin of the USB interface is connected with the other one of the bidirectional interface and the first input interface; and
an interface processing unit, connected with the USB interface circuit and the IO interface circuit respectively and configured to judge a level of the bidirectional interface after setting the bidirectional interface to be in an input mode and to turn on or turn off the USB interface circuit according to the level of the bidirectional interface.

2. The USB key device according to claim 1, wherein the bidirectional interface of the IO interface circuit comprises a second input interface and an output interface.

3. The USB key device according to claim 1, wherein the interface processing unit comprises:
a setting module, configured to set the bidirectional interface to be in the input mode;
a judging module, configured to judge whether the bidirectional interface has a low level or a high level when the bidirectional interface is in the input mode; and
a controlling module, configured to turn off the USB interface circuit when the bidirectional interface has the high level and to turn on the USB interface circuit when the bidirectional interface has the low level.

4. The USB key device according to claim 1, wherein the IO interface circuit is integrated in the security chip.

5. The USB key device according to claim 1, wherein the security chip is an intelligent card chip.

6. The USB key device according to claim 1, wherein the clock is integrated in the security chip.

7. The USB key device according to claim 1, wherein the clock frequency setting unit sets a frequency of the clock to be 9600bps.

8. A method for realizing an intelligent card communication of a USB key device through a USB interface, the USB key device being the USB key device according to claim 1, and the method comprising:
setting the bidirectional interface of the IO interface circuit connected with the USB interface to be in the input mode when the USB key device is powered on;
judging whether a level of the bidirectional interface is a high level or a low level;
if the level of the bidirectional interface is the low level, turning on the USB interface circuit to connect the security chip with the USB interface through the USB interface circuit so as to enable the USB key device to realize a USB device communication; and
if the level of the bidirectional interface is the high level, turning off the USB interface circuit to connect the security chip with the USB interface through the IO interface circuit so as to enable the USB key device to realize the intelligent card communication.

9. The method according to claim 8, further comprising:
using the clock of the USB key device as an input clock when the USB key device is implementing the intelligent card communication.

10. The method according to claim 8, wherein a frequency of the clock in the USB key device is 9600 bps which is readable for an intelligent card reader.

## Patentansprüche

1. USB-Schlüsselvorrichtung, die aufweist:
einen Sicherheitschip;
einen Taktgeber und eine Taktfrequenzeinstelleinheit, die mit dem Sicherheitschip verbunden sind;
eine USB-Schnittstellenschaltung mit einem ersten D⁺-Stift und mit einem ersten D⁻-Stift, die mit dem Sicherheitschip verbunden sind;
eine IO-Schnittstellenschaltung mit einer bidirektionalen Schnittstelle und einer ersten Eingangsschnittstelle, die mit dem Sicherheitschip verbunden ist;
eine USB-Schnittstelle mit einem zweiten D⁺-Stift und einem zweiten D⁻-Stift, wobei der zweite D⁺-Stift mit dem ersten D⁺-Stift der USB-Schnittstellenschaltung verbunden ist, der zweite D⁻-Stift mit dem ersten D⁻-Stift der USB-Schnittstellenschaltung verbunden ist, der zweite D⁺-Stift mit der bidirektionalen Schnittstelle oder der ersten Eingangsschnittstelle verbunden ist und der zweite D⁻-Stift der USB-Schnittstelle mit der anderen der bidirektionalen Schnittstelle bzw. der ersten Eingangsschnittstelle verbunden ist; und
eine Schnittstellenverarbeitungseinheit, die mit der USB-Schnittstellenschaltung bzw. der IO-Schnittstellenschaltung verbunden ist und konfiguriert ist, einen Pegel der bidirektionalen Schnittstelle nach dem Einstellen der bidirektionalen Schnittstelle auf einen Eingangsmodus zu beurteilen und die USB-Schnittstellenschaltung gemäß dem Pegel der bidirektionalen Schnittstelle einzuschalten oder auszuschalten.

2. USB-Schlüsselvorrichtung nach Anspruch 1, wobei die bidirektionale IO-Schnittstellenschaltung eine zweite Eingangsschnittstelle und eine Ausgangsschnittstelle aufweist.

3. USB-Schlüsselvorrichtung nach Anspruch 1, wobei die Schnittstellenverarbeitungseinheit aufweist:
ein Einstellmodul, das konfiguriert ist, die bidirektionale Schnittstelle in einen Eingangsmodus zu setzen;
ein Beurteilungsmodul, das konfiguriert ist zu beurteilen, ob die bidirektionale Schnittstelle einen Tiefpegel oder einen Hochpegel besitzt, wenn die bidirektionale Schnittstelle im Eingangsmodus ist; und
ein Steuermodul, das konfiguriert ist, die USB-Schnittstellenschaltung auszuschalten, wenn die bidirektionale Schnittstelle den Hochpegel besitzt, und die USB-Schnittstellenschaltung einzuschalten, wenn die bidirektionale Schnittstelle den Tiefpegel besitzt.

4. USB-Schlüsselvorrichtung nach Anspruch 1, wobei die IO-Schnittstellenschaltung in den Sicherheitschip integriert ist.

5. USB-Schlüsselvorrichtung nach Anspruch 1, wobei der Sicherheitschip ein intelligenter Kartenchip ist.

6. USB-Schlüsselvorrichtung nach Anspruch 1, wobei der Taktgeber in den Sicherheitschip integriert ist.

7. USB-Schlüsselvorrichtung nach Anspruch 1, wobei die Taktfrequenzeinstelleinheit eine Frequenz des Takts auf 9600 bps einstellt.

8. Verfahren zum Ausführen einer intelligenten Kartenkommunikation einer USB-Schlüsselvorrichtung über eine USB-Schnittstelle, wobei die USB-Schlüsselvorrichtung die USB-Schlüsselvorrichtung nach Anspruch 1 ist und das Verfahren umfasst:
Setzen der bidirektionalen Schnittstelle der 10-Schnittstellenschaltung, die mit der USB-Schnittstelle verbunden ist, in den Eingangsmodus, wenn die USB-Schlüsselvorrichtung eingeschaltet ist bzw. wird;
Beurteilen, ob ein Pegel der bidirektionalen Schnittstelle ein Hochpegel oder ein Tiefpegel ist;
falls der Pegel der bidirektionalen Schnittstelle der Tiefpegel ist, Einschalten der USB-Schnittstellenschaltung, um den Sicherheitschip mit der USB-Schnittstelle über die USB-Schnittstellenschaltung zu verbinden, um der USB-Schlüsselvorrichtung zu ermöglichen, eine USB-Vorrichtungskommunikation zu verwirklichen; und
falls der Pegel der bidirektionalen Schnittstelle der Hochpegel ist, Ausschalten der USB-Schnittstellenschaltung, um den Sicherheitschip mit der USB-Schnittstelle über die IO-Schnittstellenschaltung zu verbinden, um der USB-Schlüsselvorrichtung zu ermöglichen, die intelligente Kartenkommunikation zu verwirklichen.

9. Verfahren nach Anspruch 8, das ferner umfasst:
Verwenden des Taktgebers der USB-Schlüsselvorrichtung als einen Eingangstaktgeber, wenn die USB-Schlüsselvorrichtung die intelligente Kartenkommunikation implementiert.

10. Verfahren nach Anspruch 8, wobei eine Frequenz des Taktgebers in der USB-Schlüsselvorrichtung 9600 bps beträgt, was für einen intelligenten Kartenleser lesbar ist.

## Revendications

1. Dispositif de clé USB, comprenant:
une puce de sécurité ;
une horloge et une unité de réglage de fréquence d'horloge connectées à la puce de sécurité ;
un circuit d'interface USB d'une première broche D+ et d'une première broche D-, connecté à la puce de sécurité ;
un circuit d'interface IO avec une interface bidirectionnelle et une première interface d'entrée, connecté à la puce de sécurité ;
une interface USB avec une seconde broche D+ et une seconde broche D-, dans lequel la seconde broche D+ est connectée à la première broche D+ du circuit d'interface USB, la seconde broche D- est connectée à la première broche D- du circuit d'interface USB, la seconde broche D+ est connectée à l'une de l'interface bidirectionnelle et de la première interface d'entrée, et la seconde broche D- de l'interface USB est connectée à l'autre de l'interface bidirectionnelle et de la première interface d'entrée ; et
une unité de traitement d'interface, connectée au circuit d'interface USB et au circuit d'interface IO respectivement et configurée pour déterminer un niveau de l'interface bidirectionnelle après le réglage de l'interface bidirectionnelle pour être dans un mode d'entrée et activer ou désactiver le circuit d'interface USB selon le niveau de l'interface bidirectionnelle.

2. Dispositif de clé USB selon la revendication 1, dans lequel l'interface bidirectionnelle du circuit d'interface IO comporte une seconde interface d'entrée et une interface de sortie.

3. Dispositif de clé USB selon la revendication 1, dans lequel l'unité de traitement d'interface comprend :
un module de réglage, configuré pour paramétrer l'interface bidirectionnelle pour être en mode d'entrée ;
un module de détermination, configuré pour déterminer si l'interface bidirectionnelle a un niveau bas ou un niveau haut lorsque l'interface bidirectionnelle est en mode d'entrée ; et
un module de commande, configuré pour désactiver le circuit d'interface USB lorsque l'interface bidirectionnelle a le niveau haut et pour activer le circuit d'interface USB lorsque l'interface bidirectionnelle a le niveau bas.

4. Dispositif de clé USB selon la revendication 1, dans lequel le circuit d'interface IO est intégré dans la puce de sécurité.

5. Dispositif de clé USB selon la revendication 1, dans lequel la puce de sécurité est une puce de carte intelligente.

6. Dispositif de clé USB selon la revendication 1, dans lequel l'horloge est intégrée dans la puce de sécurité.

7. Dispositif de clé USB selon la revendication 1, dans lequel l'unité de réglage de fréquence d'horloge définit une fréquence de l'horloge pour être à 9600bps.

8. Procédé pour réaliser une communication de carte intelligente d'un dispositif de clé USB par l'intermédiaire d'une interface USB, le dispositif de clé USB étant le dispositif de clé USB selon la revendication 1, et le procédé comprenant les étapes consistant à :
paramétrer l'interface bidirectionnelle du circuit d'interface IO connecté à l'interface USB pour être dans le mode d'entrée lorsque le dispositif de clé USB est sous tension ;
déterminer si un niveau de l'interface bidirectionnelle est un niveau haut ou un niveau bas ;
si le niveau de l'interface bidirectionnelle est le niveau bas, activer le circuit d'interface USB pour connecter la puce de sécurité avec l'interface USB à travers le circuit d'interface USB de manière à permettre au dispositif de clé USB d'effectuer une communication de dispositif USB ; et
si le niveau de l'interface bidirectionnelle est le niveau haut, désactiver le circuit d'interface USB pour connecter la puce de sécurité avec l'interface USB à travers le circuit d'interface IO de manière à permettre au dispositif de clé USB d'effectuer la communication de carte intelligente.

9. Procédé selon la revendication 8, comprenant en outre :
d'utiliser l'horloge du dispositif de clé USB comme une horloge d'entrée lorsque le dispositif de clé USB met en oeuvre la communication de carte intelligente.

10. Procédé selon la revendication 8, dans lequel une fréquence de l'horloge dans le dispositif de clé USB est de 9600 bps qui est lisible par un lecteur de carte intelligente.
